# EUROPEAN PATENT SPECIFICATION

(11) **EP 3 289 246 B1**
(45) Date of publication and mention of the grant of the patent: **29.07.2020**
(21) Application number: 15719683.3
(22) Date of filing: 28.04.2015
(51) Int. Cl.: F16H 59/02, F16H 59/04

(54) **SHIFT LEVER ASSEMBLY**
SCHALTHEBELANORDNUNG
ENSEMBLE DE LEVIER DE CHANGEMENT DE VITESSE

(43) Date of publication of application: 07.03.2018
(73) Proprietor: Kongsberg Automotive AB, 565 28 Mullsjö (SE)
(72) Inventor: BERGNER, Jonas, S-564 33 Bankeryd (SE)
(74) Representative: Uexküll & Stolberg
(86) International application number: PCT/EP2015/059155
(87) International publication number: WO 2016/173623

(56) References cited:
- WO-A1-2004/113765
- DE-A1- 19 632 859
- DE-U1- 9 308 072
- FR-A1- 2 336 269

## Description

### Background of the Invention

This invention relates to shift lever assemblies for operating a gearbox such as a gearbox in the manual transmission of a vehicle. More particularly it relates to such shift lever assemblies having, in addition to the shift rod which transfers shift commands from the shift lever to the transmission, means to minimize the transfer of vibration in the transmission housing to the shift lever of the shift lever assembly where they would be perceived by the operator of the shift lever.

Normally motor vehicles, in particular front-wheel drive motor vehicles but also rear-wheel and all-wheel drive vehicles, are provided with a remotely-operated gearbox which transmits the torque from the engine to the wheels. The remote-operating system comprises a shift lever assembly connected to the gearbox gear selector and it is actuated by a manual gearshift lever in the vehicle cabin. A typical shift lever assembly includes a gearshift lever rotatably mounted in a shift frame adapted to be attached to the centre console or floor or dashboard of the vehicle. The lower or distal end of the gearshift lever is connected to a shift rod which leads to the gearbox and which transfers the shift commands to the gearbox. The gearshift lever typically includes a shift knob which is suitable for being gripped by the driver. The gearshift lever is supported in a partly spherical bearing in the shift frame. The spherical bearing may comprise a pivot ball connected to the gearshift lever, the pivot ball being rotatable in a ball bowl connected to the shift frame. This allows the gearshift lever to be rotated between positions corresponding to the different selectable gears of the transmission. A common set of selectable gears in a modern vehicle comprises 1 to 5 forward gears and a reverse gear. These gears are usually distributed in a so-called "double H" pattern, i.e. a pattern resembling two superimposed H's.

When the gearshift lever is positioned between gears, i.e. in what is generally called the neutral gate, the operator may move the gearshift lever in what is typically referred to as the select direction (i.e. to the right or to the left when seated in the vehicle and facing forward). This movement causes the gearshift lever to pivot about a substantially horizontal selection axis which is aligned substantially parallel to the longitudinal axis of the vehicle. This pivoting causes a rotation of the shift rod to a position where the distal end (i.e. the end nearest the gearbox) moves the gear selector in the gearbox so that it is aligned with the desired gear. Once the shift rod is aligned with the desired gear, the operator may move the gearshift lever backwards or forwards, which will cause the gearshift lever to pivot about a substantially horizontal shift axis which is aligned substantially parallel to the transverse axis of the vehicle. This pivoting movement leads to a longitudinal movement of the end of the shift rod and will cause the gear selector to engage the desired gear. Normally the shift axis and the selection axis intersect in the centre of the partly spherical mounting.

Normally the engine and transmission of a motor vehicle are mounted in flexible mounts which allow some movement of the engine and transmission with respect to the body of the vehicle. Such movements pull or push on the shift rod and cause the shift lever to move in the opposite direction. The amplitude of the movements is amplified by the length of the gearshift lever and the resulting large movement of the shift knob may become distracting to the operator of the vehicle. In order to reduce these movements it is known to provide a reaction rod between the gearbox and shift lever assembly.

An example of such shift lever assembly with a reaction rod is known from WO 2004/113765 ('765) to Kongsberg Automotive which discloses a shift lever assembly according to the preamble of claim 1. More particularly, the '765 document describes a shift lever assembly having a gear rod 5 and a reaction stay wire 9. The gear rod 5 and the reaction stay wire 9 are each connected to a connecting part 41 which in turn is rotatably mounted on the shift lever 1, such that the connecting part 41 may rotate around the longitudinal axis of the shift lever 1 in response to displacement of the reaction stay wire 9 along said wire's longitudinal axis. Consequently, displacement (e.g. vibrations) of the transmission which results in the axial displacement of the gear rod 5 are not transferred into the shift lever, since the reaction stay wire 9 will correspondingly displace the connecting part 41, to which the gear rod 5 is connected. In order to allow rotation of the connecting part 41 around the shift lever's axis, the gear rod 5 is connected to the connecting part via a ball joint 43 on one side of the axis and via a slide 53 sliding in a guide 54 on the other side of the axis. The connection of the gear rod is quite bulky and the shift lever assembly suffers from friction caused when the slide 53 slides in the guide 54.

The present invention sets out to provide a more compact vibration transmission minimizing shift lever assembly.

### Brief Description of the Invention

This objective is solved by a shift lever assembly comprising the features of claim 1, and thus having a reaction rod interconnecting the transmission housing to the shift lever assembly such as to minimize the transfer of vibration of or in the transmission housing to the shift lever of the shift lever assembly where they would be perceived by the operator of the shift lever. Preferred embodiments of the invention are set out in the dependent claims.

### Brief Description of the Drawing

Figure 1 shows schematically in perspective a first embodiment of a shift assembly in accordance with the present invention in a neutral position
Figure 2 shows schematically in perspective the shift assembly of figure 1 in a shift position.
Figure 3a) shows schematically a plane view of the shift lever assembly in a first position.
Figure 3b) shows schematically a side view of the shift lever assembly in the first position.
Figure 3c) an end view in the direction of arrow A of figure 3b) of the shift lever assembly in the first position.
Figure 3d) shows schematically a plane view of the shift lever assembly in a second position where the distance between the gearbox and shift lever assembly has been reduced by a distance b.
Figure 3e) shows schematically a side view of the shift lever assembly in the second position.
Figure 3f) an end view in the direction of arrow A' of figure 3e) of the gearbox and shift lever assembly in the second position.
Figure 4a) shows a perspective view from above of a second embodiment of a shift lever assembly in accordance with the present invention.
Figure 4b) shows a second perspective view from above of the second embodiment of a shift lever assembly in accordance with the present invention.
Figure 4c) shows a perspective view from in front of the second embodiment of a shift lever assembly in accordance with the present invention.
Figure 4d) shows a perspective view from below of the second embodiment of a shift lever assembly in accordance with the present invention.
Figure 4e) shows a perspective view from behind of the second embodiment of a shift lever assembly in accordance with the present invention.

### Detailed Description of the Invention

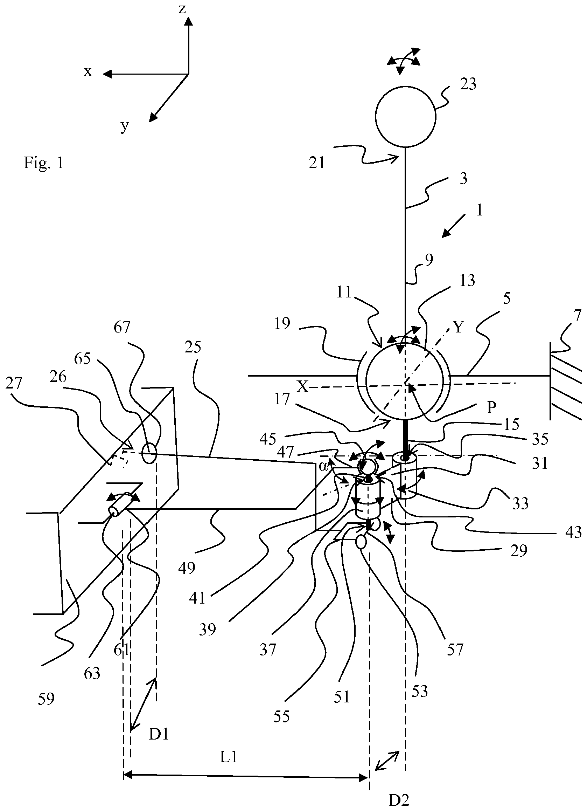

In the following description a frame of reference is defined with three orthogonal axis, "x", "y" and "z" which have their origins in the center P of the pivot ball of the gearshift lever. The x-axis and y-axis extend in a horizontal plane and the z-axis extends vertically from this plane. In the following illustrative example of the invention positive x-axis values extend in the direction of a straight line from the pivot point P of the gearshift lever to the joint between the shift rod and the gearbox selection mechanism. In general a shift movement of the gearshift lever will be considered to involve a longitudinal movement in the x-axis of the distal end of a shift rod and a rotation about the y-axis of the gearshift lever. Positive y-axis displacements extend to the left when facing in the positive x-axis direction and are perpendicular to the longitudinal x-axis. In general a selection movement of the gearshift lever will be considered to involve a transverse movement in the x-axis and a rotation of the gearshift lever around the x-axis. Positive z-axis displacements extend upwards when facing in the positive x-axis direction. References to directions such as up, down, above, below, etc., and relative positions such as forwards, backwards, to the left, to the right, horizontally, vertically, longitudinally, transversely, etc. are not intended to be limiting but are merely to aid understanding of the invention and are used in an illustrative manner wherein the invention is described as if it is used in a motor vehicle with a front mounted engine and gearbox. Unless otherwise clear from the context or otherwise stated, the term "longitudinally" in general means a direction along the x-axis, the term "transversely" in general means a direction along the y-axis and the term "vertically" in general means a direction along the z-axis. The following figures 1 to 4e are not to scale and some proportions have been exaggerated to make the figures more easily understood.

In a preferred embodiment of the present invention as shown in figure 1, a shift lever assembly 1 includes a gearshift lever 3 pivotally mounted about a pivot point P formed in a shift frame 5. The shift frame is adapted to be attached to the body of a vehicle, for example to the floor 7 or to the centre console or to the dash board or the like. The gearshift lever comprises an elongated shaft 9 which extends upwardly from the upper side 11 of bearing means such a pivot ball 13 which allow it to rotate in the longitudinal and transverse directions with respect to the shift frame. In this embodiment of the invention, pivot point P coincides with the centre of pivot ball 13. An elongated first connection shaft 15 is fixed to, preferably, the lower side 17 of the pivot ball, and the longitudinal axis of the first connection shaft extends, preferably radially, downwardly from the pivot ball. The first connection shaft follows any movement of the gearshift lever. In this example it is is shown as being coaxial with the gearshift lever which is arranged above the pivot ball but it is conceivable that they are not coaxial. For example, they may be arranged offset and parallel to each other or at an angle to each other. The pivot ball 13 is mountable in a pivot bowl 19 attached to the shift frame. The pivot ball and pivot bowl act like a spherical ball joint and allow the gear shift lever to rotate around the central pivot point P of the pivot ball. The gearshift lever typically includes a proximal upper end 21 to which is attached a shift knob 23 which is suitable for being gripped by the driver. The gearshift lever is displaceable between positions corresponding to the different selectable gears of the gearbox. For example there may be five selectable forward gears and one reverse gear. These gears may be distributed in a so-called "double H" pattern, i.e. a pattern resembling two superimposed H's.

When the gearshift lever is positioned between gears, i.e. in what is generally called the neutral gate, the operator may rotate the gearshift lever in what is typically referred to as the select direction (i.e. right/left) about a preferably substantially longitudinal, preferably substantially horizontal selection axis X. When aligned with the desired gear, the operator may rotate the gearshift lever backwards or forwards about a preferably substantially transverse, preferably substantially horizontal shift axis Y which will cause the desired gear to be engaged. Preferably, as shown in figure 1, selection axis X and shift axis Y intersect at the central pivot point P of the pivot ball of the gearshift lever but it is conceivable that they do not intersect if other types of pivoting mounting of the gearshift lever are used.

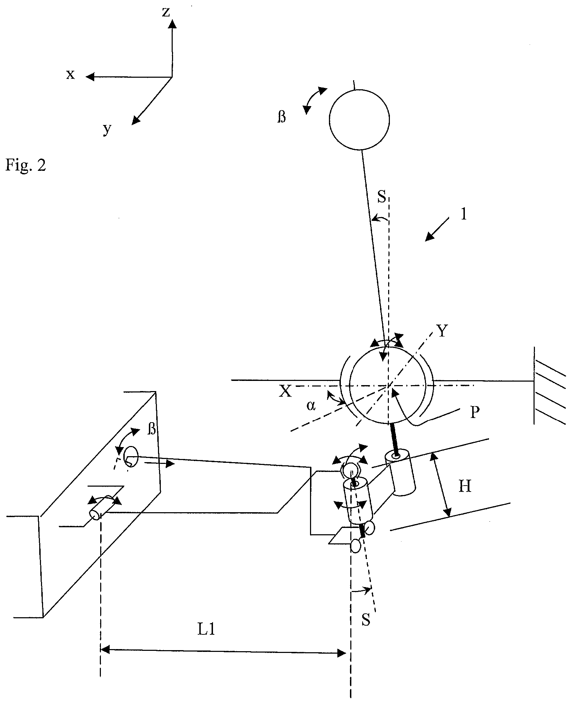

The shift lever assembly includes a shift rod 25 which extends forwards from the shift assembly and at, or near, its distal end 26 is connectable to, and able to transfer gearshift lever movements to, the selection mechanism of the gearbox 27. As described below in more detail, the shift rod is connected at, or near, its proximal end 55 by a floating link 29 to the first connection shaft 15 which extends below the pivot ball. The floating link comprises a link body 31 with a first end 33 which comprises a nominally vertical bore 35 which is rotatably mounted around the first connection shaft 15, and a second end 37. The second end of the body 31 comprises a nominally vertical second bore 39 which is substantially parallel with the first vertical bore. The link body of the floating link is arranged with its longitudinal axis (which passes through the centres of the first and second bore) extending laterally from the longitudinal axis of the first connection shaft and the concentric, surrounding first bore at an angle α to the x-axis. A second connection shaft 41 is rotatably mounted in said second bore and projects out from both ends of said second bore. The upper first end 43 of the second connection shaft is closer to the pivot point P than the lower second end 51 of said second connection shaft. The first end 43 comprises a multi-axis connection means such as a ball joint 45, which connects it to the proximal end 47 of a reaction rod 49. Preferably the centre of the ball joint 45 is in the same horizontal plane (i.e. the z= 0 plane) as the pivot point P when the gear shift lever is in the neutral gate. The lower second end 51 of the second connection shaft is connected by a joint 53 to the proximal end 55 of the shift rod 25. Preferably this joint is a single-axis joint. This joint comprises a substantially horizontal, substantially transverse axis 57. This is joint is the only connection between the proximal end of the shift rod and the other components of the shift rod assembly which is needed to ensure that movements of the gear shift lever are transmitted to the selection mechanism of the gearbox. The shift rod may only pivot relative to the connection shaft around this single pivot axis. The pivot axis of single-axis joint 53 is positioned at a predetermined distance H in the longitudinal direction of the second connection shaft below the pivot centre of the multi-axis connection means of the reaction rod, where H is preferably equal to or greater than 1 cm and equal to or less than 5 cm, more preferably equal to or greater than 1.2 cm and equal to or less than 4 cm and most preferably equal to or greater than 1.4 cm and equal to or less than 3 cm. This enables the proximal end of the shift rod to move in an arc and the distal end of the shift rod to move substantially longitudinally, in response to the rotation of the gearshift lever forward through the angle S in the shift direction as illustrated in figure 2. Rotation of the gearshift lever through angle β in the selection direction causes the rotation of the proximal and distal ends of the shift rod through the same angle β.

The reaction rod extends towards the gearbox housing 59 and the distal end 61 of the reaction rod is pivotably mounted via a substantially horizontal, substantially transverse axis 63 to the gearbox housing positioned at a predetermined distance D1 to one side of the joint 65 between the shift rod and the gearbox selection mechanism 67. In this way the second end 37 of the floating link is maintained by the reaction rod at a substantially fixed distance L1 from the gearbox housing, where L1 corresponds to the distance between the pivot axis of the ball joint 45 and transverse axis 63. In order to allow at least a small measure of freedom of movement of the distal end of the reaction rod around other axes, the transverse axis 63 may be mounted to the gearbox housing using a rubber or other elastic bush or the transverse housing may be replaced by a spherical bearing. This allows easier mounting of the reaction rod and also allows it to be subject to some sideways and rotational forces without binding. The ball joint 45 between the reaction rod and the floating link provides a pivot axis for the movement of the shift rod in response to the movement of the gearshift lever. Without the reaction rod which keeps the floating link stationary, rotation of the gearshift lever in the shift direction would normally only result in the rotation of the floating link around the first connection shaft and would not cause the distal end of the shift rod to shift the selection mechanism of the gearbox to the desired gear. The reaction rod also transfers to the floating link any longitudinal displacements of the gearbox housing relative to the body of the vehicle. Such displacements cause the floating link to be rotated around the first and second connection shafts in a manner which moves the shift rod a longitudinal distance that corresponds exactly to the longitudinal distance which the gearbox housing has been moved. This ensures that the distal end of the shift rod remains stationary with respect to the selection mechanism while at the same time ensuring that the movement of the gearbox housing relative the body of the vehicle does not get transmitted to the gear shift lever - the movement causes the second end of the floating link to rotate with respect to the first connection shaft. Preferably the centre-to-centre distance D2 between the first and second bore of the floating link is the same as distance D1 so that any longitudinal movement of the gearbox housing is copied substantially exactly by the longitudinal movement of the second end of the floating link.

In this way the floating link is adapted to transmit rotation movement of the gearshift lever around the axis X and axis Y to the shift rod while at the same time preventing transmission of any longitudinal motion of the shift rod to the gearshift lever. This means that when the gearshift lever is pivoted in the forward direction, the shift rod will be displaced backwards, thus pulling the selection component of the transmission to which it is connected. When the gearshift lever is pivoted backwards, the opposite movement occurs in the shift rod. When the gearshift lever is pivoted to the left then the shift rod will be rotated to the right and when the gearshift lever is rotated to the right the shift rod will be rotated to the left thereby causing said selection component of the transmission to rotate around its own axis.

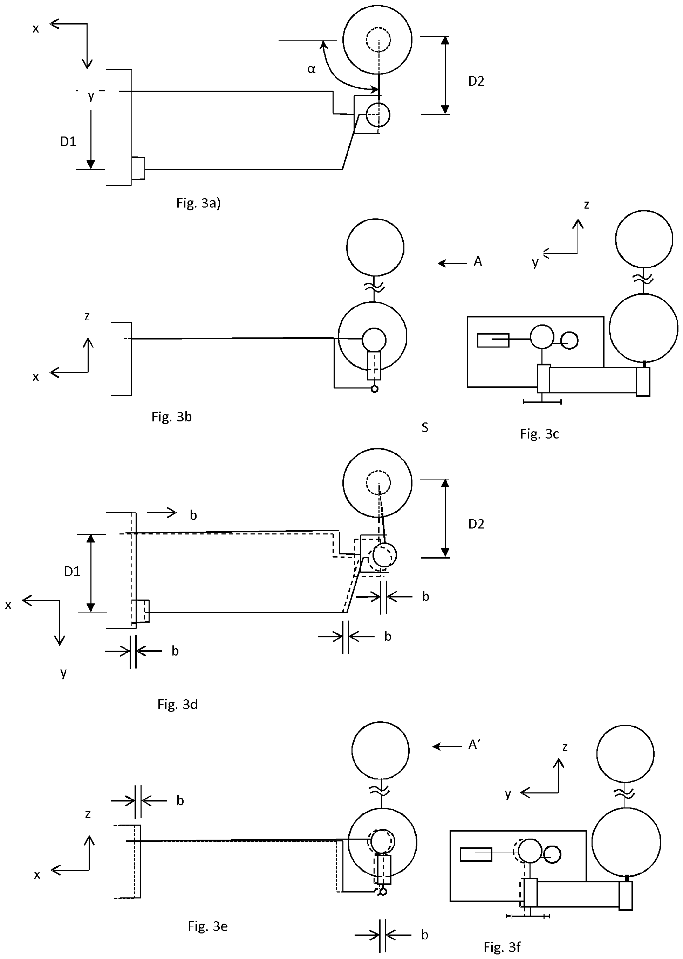

Figure 3a) shows schematically a plane view, figure 3b) a side view and figure 3c) an end view in the direction of arrow A of the gearbox and shift lever assembly in a first position. Figure 3d) shows schematically a plane view, figure 3e) a side view and figure 3f) an end view in the direction of arrow A' of the gearbox and shift lever assembly in a second position where the gearbox has moved backwards, i.e. towards the gearshift lever, a longitudinal distance b. This movement moves the reaction rod to move back an equal amount b and the reaction rod causes the second connection shaft to move backwards the same distance b. This pulls the second end 37 of the floating link and the proximal end of the shift rod backwards substantially the same distance - thus maintaining the distal end of the shift rod in the current selection position. As the floating link can rotate around the first and second connection rods, the backwards movement of the second end of the floating link can be absorbed by the rotation of the floating link around the first and second connection rods and the rearward displacement of the second end of the floating link. Substantially no longitudinal movement of the gearbox is transmitted to the gearshift lever.

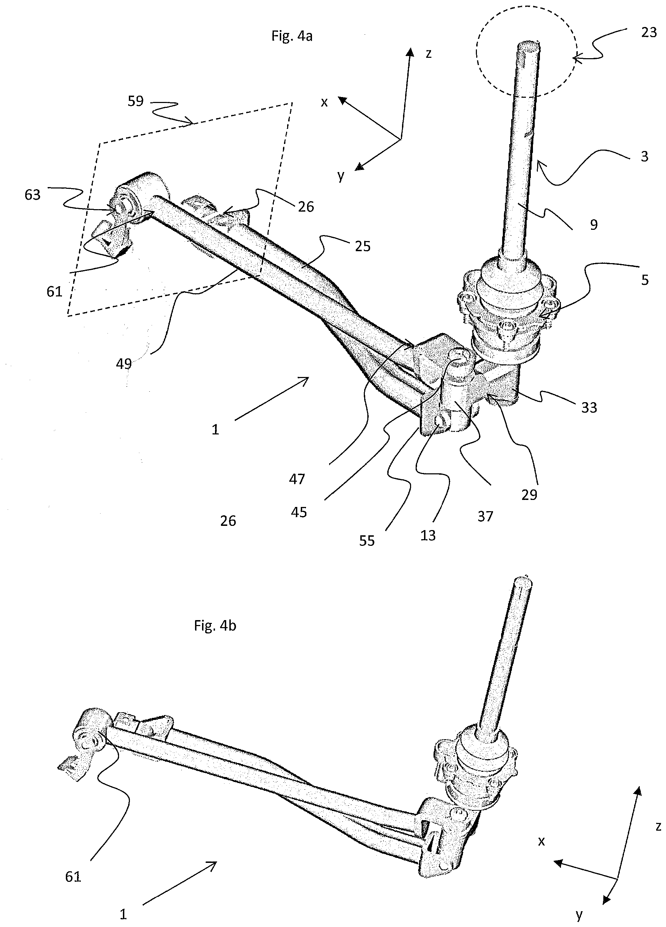

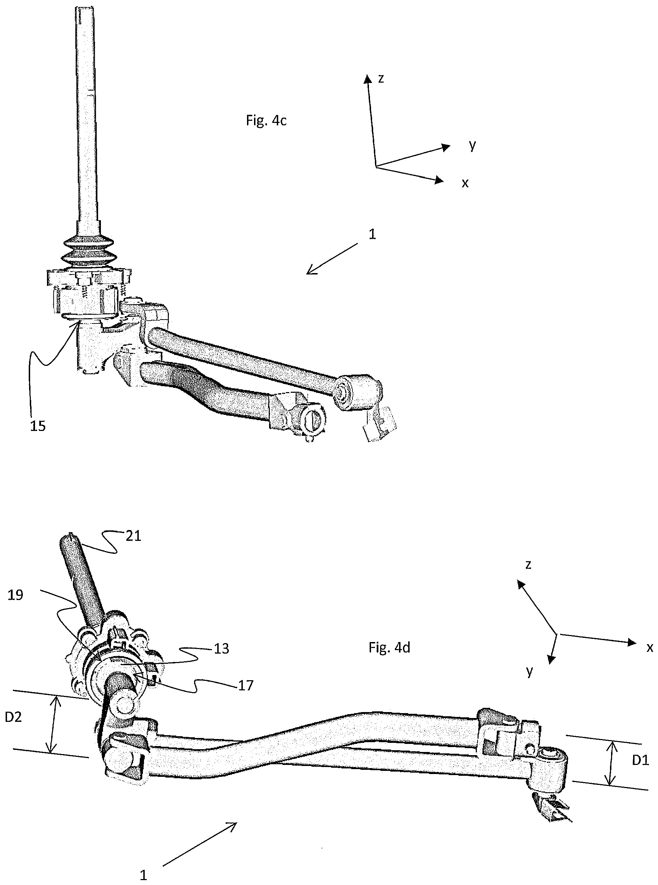

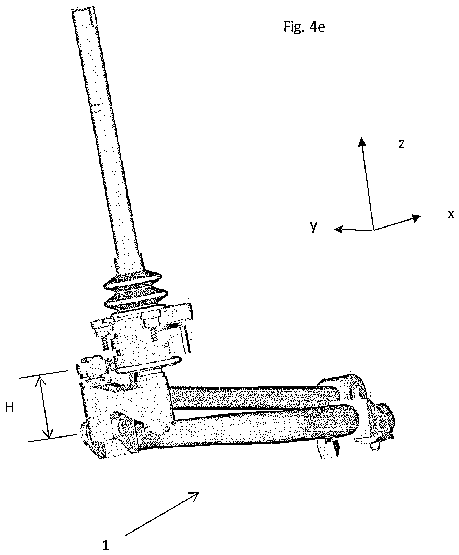

Figures 4a) to 4e) show schematically rendered views of an embodiment of a shift lever assembly according to the present invention. In these views the same reference numbers are used for components corresponding to those shown in figures 1 to 3f). Figure 4a) shows a perspective view from above, figure 4b) shows a second perspective view from above, figure 4c) shows a perspective view from in front, figure 4d) shows a perspective view from below and figure 4e) shows a perspective view from behind of this embodiment of a shift lever assembly.

As mentioned above, the floating link extends laterally from the first connection rod at angle α. As the transmission moves back and forth the angle α between body of the floating link and the longitudinal axis of the shift lever assembly changes. This change in angle changes the distance in the Y-direction between the axis of first and second connecting shafts - the distance being a maximum and equal to D2 when the angle α is 90 degrees. The floating link may be arranged so that when the vehicle to which it is fitted is stationary, the engine of the vehicle is switched off and thus not generating any vibrations which could cause movement of the reaction rod and floating link, and the gearshift lever is in the neutral gate, then the angle α in the z = 0 plane between the longitudinal axis between the connecting rods of the floating link and the longitudinal axis of the reaction rod is preferably greater than or equal to 60 degrees and equal to or less than 120 degrees, more preferably is equal to or greater than 70 degrees and equal to or less than 110 degrees, even more preferably greater than or equal to 80 degrees and equal to or less than 100 degrees, yet more preferably preferably greater than or equal to 85 degrees and equal to or less than 95 degrees and most preferably is 90 degrees. Preferably the shift lever assembly is arranged so that the floating link can rotate around the first connection shaft through an angle δ which is equal to or greater than 20 degrees forwards and which is equal to or greater than 20 degrees backwards. This allows the floating link to compensate for longitudinal movements b of b= (D2 * sine 20 degrees) in both the forward and backward directions. More preferably the shift lever assembly is arranged so that the floating link can rotate around the first connection shaft through an angle which is equal or greater than a total of 50 degrees and thus compensate for even larger longitudinal movement. Preferably the floating link is prevented from rotating more than 60 degrees in the forward direction or in the backward direction.

The distance D2 in the Y-direction between the axis of first and second connecting shafts of the floating link is adapted to the size of the vehicle which it is intended to be used on. Preferably D2 is greater than or equal to 2 cm and equal to or less than 15 cm, more preferably is greater than or equal to 2.5 cm and equal to or less than 10 cm and even more preferably is greater than or equal to 3 cm and equal to or less than 5 cm.

The shift lever assembly may be mounted to a gearbox housing to form a sub-assembly which subsequently can be mounted as a unit to the body of a vehicle.

Alternatively the shift lever assembly can be mounted to the body of a vehicle to which subsequently a gearbox can be mounted.

The inventions is not intended to be limited by the embodiments described above, but can be varied within the scope of the appended claims.

## Claims

1. A shift lever assembly (1) for selecting gears in a gearbox (27) of a vehicle, the shift lever assembly comprising:
a gearshift lever (3) pivotally mounted with respect to a pivot point (P) and which gearshift lever is pivotable between a plurality of gear selection positions and gear shift positions,
a longitudinally-extending shift rod (25) able to be operatively coupled at its distal end (26), which is distal with respect to the gearshift lever (3), to a selection mechanism of the gearbox (27) such as to be able to transfer to the gearbox any shift and selection commands generated by the pivotal movement of the shift lever, a shift movement of the gearshift lever will be considered to involve a longitudinal movement in a x-axis of the distal end of the shift rod (25) and a rotation about a y-axis of the gearshift lever (3) and a selection movement of the gearshift lever (3) will be considered to involve a transverse movement in the x-axis and a rotation of the gearshift lever (3) around the x-axis, wherein the y-axis extends in a horizontal plane through the pivot point (P) and perpendicular to the x-axis, and a vertical z-axis extends through the pivot point and perpendicular to the horizontal plane of the x- and y-axes and generally in the direction of the gearshift lever (3);
a longitudinally-extending reaction rod (49) able to be pivotably coupled at its distal end (61), which is distal with respect to the gearshift lever (3), to the gearbox;
**characterized in that** the shift lever assembly comprises a first connection shaft (15) extending from said pivot point (P),
wherein a floating link (29) having a link body (31) with a first end (33) and a second end (37) is mounted at said first end (33) to said first connection shaft (15) and is adapted to be rotatable around the longitudinal axis of said first connection shaft,
wherein the longitudinal axis of the floating link (29) extends from said longitudinal axis of the first connection shaft laterally at an angle α with respect to the x-axis in the horizontal plane,
wherein a second connection shaft (41) is rotatably mounted at said second end (37) of the floating link (29) and is adapted to be rotatable about a longitudinal axis which is substantially parallel with the longitudinal axis of the first connection shaft (15),
wherein the second connection shaft (41) has an upper first end (43) and a lower second end (51), wherein the terms upper and lower referring to the relative position of the first and second ends along the z-axis,
wherein a proximal end (47) of the reaction rod, which is opposite to its distal end (61), is pivotably connected by a joint (45) to the upper first end (43) of the second connection shaft (41),
wherein a proximal end (55) of the shift rod, which is opposite to its distal end (26), is pivotably connected to the lower second end (51) of the second connection shaft (41) by a joint (57), and that
the joint (57) connecting the proximal end (55) of the shift rod to the lower second end (51) of the second connection shaft (41) is arranged at a predetermined distance (H) in the longitudinal direction of the second connection shaft (41) from the pivot axis of the joint (45) connecting the proximal end (47) of the reaction rod (49) to the upper first end of the second connection shaft (41).

2. A shift lever assembly according to claim 1, **characterised in that** the first connection shaft (15) is mounted on the side of the pivot point which is opposite to the gearshift lever (3) with respect to the horizontal plane.

3. A shift lever assembly according to claim 1 or 2, **characterised in that** the longitudinal axis of the first connection shaft (15) is aligned with the longitudinal axis of the gearshift lever (3).

4. A shift lever assembly according to any of the previous claims, **characterised in that** a centre-to-centre distance (D2) between the first connection shaft (15) and the second connection shaft (41) is greater than or equal to 2 cm and equal to or less than 15 cm.

5. A shift lever assembly according to claim 4, **characterised in that** a centre-to-centre distance (D2) between the first connection shaft (15) and the second connection shaft (41) is greater than or equal to 2.5 cm and equal to or less than 10 cm.

6. A shift lever assembly according to claim 5, **characterised in that** a centre-to-centre distance (D2) between the first connection shaft (15) and the second connection shaft is greater than or equal to 3cm and equal to or less than 5 cm.

7. A shift lever assembly according to any of the previous claims, **characterised in that** the angle α is greater than or equal to 60 degrees and equal to or less than 120 degrees.

8. A shift lever assembly according to claim 7, **characterised in that** the angle α is greater than or equal to 70 degrees and equal to or less than 110 degrees.

9. A shift lever assembly according to any of the previous claims, wherein distance H is equal to or greater than 1 cm and equal to or less than 5 cm.

10. A shift lever assembly according to claim 9, wherein distance H is equal to or greater than 1.2 cm and equal to or less than 4 cm.

11. A shift lever assembly according to claim 10, wherein distance H is equal to or greater than 1.4 cm and equal to or less than 3 cm.

12. An assembly of a gearbox and a shift lever assembly, the assembly comprising a gearbox and a shift lever assembly according to any of the previous claims.

13. An assembly of a vehicle body and a shift lever assembly, the assembly comprising a vehicle body and a shift lever assembly according to any of the claims 1 to 11.

## Patentansprüche

1. Schalthebelanordnung (1) zum Auswählen von Gängen in einer Gangschaltung (27) eines Fahrzeugs, wobei die Schalthebelanordnung aufweist:
einen Gangschalthebel (3), der in Bezug auf einen Schwenkpunkt (P) schwenkbar gelagert ist und der zwischen mehreren Gangauswahlstellungen und Gangschaltstellungen schwenkbar ist,
eine in Längsrichtung ausgedehnte Schaltstange (25), die dazu in der Lage ist, an ihrem distalen Ende (26), das in Bezug auf den Gangschalthebel (3) distal ist, mit einem Auswahlmechanismus der Gangschaltung (27) betriebsmäßig gekoppelt zu werden, um so in der Lage zu sein, jegliche Schalt- und Auswahlbefehle, die durch die Schwenkbewegung des Schalthebels erzeugt werden, auf die Gangschaltung zu übertragen, wobei eine Schaltbewegung des Gangschalthebels als eine Längsbewegung des distalen Endes der Schaltstange (25) in einer x-Achsenrichung und eine Drehung des Gangschalthebels (3) um eine y-Achse bewirkend angesehen wird und eine Auswahlbewegung des Gangschalthebels (3) als eine Querbewegung in der x-Achse und eine Drehung des Gangschalthebels (3) um die x-Achse bewirkend betrachtet wird, wobei die y-Achse in einer horizontalen Ebene durch den Schwenkpunkt (P) und senkrecht zu der x-Achse verläuft und wobei eine vertikale z-Achse durch den Schwenkpunkt und senkrecht zu der horizontalen Ebene der x- und y-Achsen und allgemein in der Richtung des Gangschalthebels (3) verläuft,
eine in Längsrichtung ausgedehnte Abstützstange (49), die dazu in der Lage ist, mit ihrem distalen Ende (61), das in Bezug auf den Gangschalthebel (3) distal ist, schwenkbar mit der Gangschaltung verbunden zu werden,
**dadurch gekennzeichnet, dass** die Schalthebelanordnung eine erste Verbindungsstange (15), die von dem Schwenkpunkt (P) ausgeht, aufweist, wobei eine unverankerte Verbindung (29), die einen Verbindungskörper (31) und ein erstes Ende (33) und ein zweites Ende (37) hat, mit dem ersten Ende (33) mit der ersten Verbindungsstange (15) verbunden ist und dazu ausgestaltet ist, um die Längsachse der ersten Verbindungsstange drehbar zu sein, wobei die Längsachse der unverankerten Verbindung (29) von der Längsachse der ersten Verbindungsstange seitlich unter einem Winkel α in Bezug auf die X-Achse in der horizontalen Ebene verläuft,
wobei eine zweite Verbindungsstange (41) drehbar mit dem zweiten Ende (37) der unverankerten Verbindung (29) verbunden ist und dazu ausgestaltet ist, um eine Längsachse, die im Wesentlichen parallel zu der Längsachse der ersten Verbindungsstange (15) steht, drehbar zu sein,
wobei die zweite Verbindungsstange (41) ein oberes erstes Ende (43) und ein unteres zweites Ende (51) hat, wobei die Begriffe oben und unten sich auf die relative Position der ersten und zweiten Enden entlang der z-Achse beziehen,
wobei ein proximales Ende (47) der Abstützstange, das dem distalen Ende (61) gegenüberliegt, schwenkbar durch ein Gelenk (45) mit dem oberen ersten Ende (43) der zweiten Verbindungsstange (41) verbunden ist,
wobei ein proximales Ende (55) der Schaltstange, das ihrem distalen Ende (26) gegenüberliegt, durch ein Verbindungsstück (57) schwenkbar mit dem unteren Ende (51) der zweiten Verbindungsstange (41) verbunden ist,
und dass das Verbindungsstück (57), das das proximale Ende (55) der Schaltstange mit dem unteren zweiten Ende (51) der zweiten Verbindungsstange (41) verbindet, in einem vorgegebenen Abstand (H) in Längsrichtung der zweiten Verbindungsstange (41) von der Schwenkachse des Gelenks (45) angeordnet ist, das das proximale Ende (47) der Abstützstange (49) mit dem oberen ersten Ende der zweiten Verbindungsstange (41) verbindet.

2. Schalthebelanordnung nach Anspruch 1, **dadurch gekennzeichnet, dass** die erste Verbindungsstange (15) auf der Seite des Schwenkpunkts montiert ist, die in Bezug auf die horizontale Ebene dem Gangschalthebel (3) gegenüberliegt.

3. Schalthebelanordnung nach Anspruch 1 oder 2, **dadurch gekennzeichnet, dass** die Längsachse der ersten Verbindungsstange (15) mit der Längsachse des Gangschalthebels (3) ausgerichtet ist.

4. Schalthebelanordnung nach einem der vorhergehenden Ansprüche, **dadurch gekennzeichnet, dass** ein Mittenabstand (D2) zwischen der ersten Verbindungsstange (15) und der zweiten Verbindungsstange (41) größer gleich 2 cm und kleiner gleich 15 cm ist.

5. Schalthebelanordnung nach Anspruch 4, **dadurch gekennzeichnet, dass** ein Mittenabstand (D2) zwischen der ersten Verbindungsstange (15) und der zweiten Verbindungsstange (41) größer gleich 2,5 cm und kleiner gleich 10 cm ist.

6. Schalthebelanordnung nach Anspruch 5, **dadurch gekennzeichnet, dass** ein Mittenabstand (D2) zwischen der ersten Verbindungsstange (15) und der zweiten Verbindungsstange größer gleich 3 cm und kleiner gleich 5 cm ist.

7. Schalthebelanordnung nach einem der vorhergehenden Ansprüche, **dadurch gekennzeichnet, dass** der Winkel α größer gleich 60° und kleiner gleich 120° ist.

8. Schalthebelanordnung nach Anspruch 7, **dadurch gekennzeichnet, dass** der Winkel α größer gleich 70° und kleiner gleich 110° ist.

9. Schalthebelanordnung nach einem der vorhergehenden Ansprüche, wobei der Abstand H größer gleich 1 cm und kleiner gleich 5 cm ist.

10. Schalthebelanordnung nach Anspruch 9, wobei der Abstand H größer gleich 1,2 cm und kleiner gleich 4 cm ist.

11. Schalthebelanordnung nach Anspruch 10, wobei der Abstand H größer gleich 1,4 cm und kleiner gleich 3 cm ist.

12. Anordnung einer Gangschaltung und einer Schalthebelanordnung, wobei die Anordnung eine Gangschaltung und eine Schalthebelanordnung nach einem der vorhergehenden Ansprüche aufweist.

13. Anordnung eines Fahrzeugaufbaus und einer Schalthebelanordnung, wobei die Anordnung einen Fahrzeugaufbau und eine Schalthebelanordnung nach einem der Ansprüche 1 bis 11 aufweist.

## Revendications

1. Ensemble de levier de changement de vitesse (1) pour la sélection de vitesses dans une boîte de vitesses (27) d'un véhicule, l'ensemble de levier de changement de vitesse comprenant :
un levier de changement de vitesse (3) monté de manière pivotante par rapport à un point de pivotement (P) et lequel levier de changement de vitesse peut pivoter entre une pluralité de positions de sélection de vitesse et de positions de changement de vitesse,
une tige de changement de vitesse (25) s'étendant longitudinalement apte à être couplée de manière fonctionnelle à son extrémité distale (26), laquelle est distale par rapport au levier de changement de vitesse (3), à un mécanisme de sélection de la boîte de vitesses (27) de sorte à être apte à transférer à la boîte de vitesses toute les commandes de changement et de sélection générées par le mouvement pivotant du levier de changement de vitesse, un mouvement de changement de vitesse du levier de changement de vitesse sera considéré comme impliquant un mouvement longitudinal dans un axe x de l'extrémité distale de la tige de changement de vitesse (25) et une rotation autour d'un axe y du levier de changement de vitesse (3) et un mouvement de sélection du levier de changement de vitesse (3) sera considéré comme impliquant un mouvement transversal dans l'axe x et une rotation du levier de changement de vitesse (3) autour de l'axe x, dans lequel l'axe y s'étend dans un plan horizontal par le point de pivotement (P) et perpendiculaire à l'axe x, et un axe z vertical s'étend par le point de pivotement et perpendiculaire au plan horizontal des axes x et y et généralement dans la direction du levier de changement de vitesse (3) ;
une tige de réaction (49) s'étendant longitudinalement apte à être couplée de manière pivotante à son extrémité distale (61), laquelle est distale par rapport au levier de changement de vitesse (3), à la boîte de vitesses ;
**caractérisé en ce que** l'ensemble de levier de changement de vitesse comprend un premier arbre de connexion (15) s'étendant dudit point de pivotement (P),
dans lequel une liaison flottante (29) ayant un corps de liaison (31) avec une première extrémité (33) et une deuxième extrémité (37) est montée à ladite première extrémité (33) audit premier arbre de connexion (15) et est adaptée pour être rotative autour de l'axe longitudinal dudit premier arbre de connexion,
dans lequel l'axe longitudinal de la liaison flottante (29) s'étend dudit axe longitudinal du premier arbre de connexion latéralement à un angle α par rapport à l'axe x dans le plan horizontal,
dans lequel un deuxième arbre de connexion (41) est monté de manière rotative à ladite deuxième extrémité (37) de la liaison flottante (29) et est adapté pour être rotatif autour d'un axe longitudinal lequel est sensiblement parallèle à l'axe longitudinal du premier arbre de connexion (15), dans lequel le deuxième arbre de connexion (41) a une première extrémité supérieure (43) et une deuxième extrémité inférieure (51), dans lequel les termes supérieur et inférieur se réfèrent à la position relative des première et deuxième extrémités le long de l'axe z,
dans lequel une extrémité proximale (47) de la tige de réaction, laquelle est opposée à son extrémité distale (61), est connectée de manière pivotante par une articulation (45) à la première extrémité supérieure (43) du deuxième arbre de connexion (41),
dans lequel une extrémité proximale (55) de la tige de changement de vitesse, laquelle est opposée à son extrémité distale (26), est connectée de manière pivotante à la deuxième extrémité inférieure (51) du deuxième arbre de connexion (41) par une articulation (57), et que
l'articulation (57) connectant l'extrémité proximale (55) de la tige de changement de vitesse à la deuxième extrémité inférieure (51) du deuxième arbre de connexion (41) est agencée à une distance (H) prédéterminée dans la direction longitudinale du deuxième arbre de connexion (41) de l'axe de pivotement de l'articulation (45) connectant l'extrémité proximale (47) de la tige de réaction (49) à la première extrémité supérieure du deuxième arbre de connexion (41).

2. Ensemble de levier de changement de vitesse selon la revendication 1, **caractérisé en ce que** le premier arbre de connexion (15) est monté sur le côté du point de pivotement lequel est opposé au levier de changement de vitesse (3) par rapport au plan horizontal.

3. Ensemble de levier de changement de vitesse selon la revendication 1 ou 2, **caractérisé en ce que** l'axe longitudinal du premier arbre de connexion (15) est aligné avec l'axe longitudinal du levier de changement de vitesse (3).

4. Ensemble de levier de changement de vitesse selon l'une quelconque des revendications précédentes, **caractérisé en ce qu'**une distance centre-à-centre (D2) entre le premier arbre de connexion (15) et le deuxième arbre de connexion (41) est supérieure ou égale à 2 cm et égale ou inférieure à 15 cm.

5. Ensemble de levier de changement de vitesse selon la revendication 4, **caractérisé en ce qu'**une distance centre-à-centre (D2) entre le premier arbre de connexion (15) et le deuxième arbre de connexion (41) est supérieure ou égale à 2,5 cm et égale ou inférieure à 10 cm.

6. Ensemble de levier de changement de vitesse selon la revendication 5, **caractérisé en ce qu'**une distance centre-à-centre (D2) entre le premier arbre de connexion (15) et le deuxième arbre de connexion est supérieure ou égale à 3 cm et égale ou inférieure à 5 cm.

7. Ensemble de levier de changement de vitesse selon l'une quelconque des revendications précédentes, **caractérisé en ce que** l'angle α est supérieur ou égal à 60 degrés et égal ou inférieur à 120 degrés.

8. Ensemble de levier de changement de vitesse selon la revendication 7, **caractérisé en ce que** l'angle α est supérieur ou égal à 70 degrés et égal ou inférieur à 110 degrés.

9. Ensemble de levier de changement de vitesse selon l'une quelconque des revendications précédentes, dans lequel la distance H est égale ou supérieure à 1 cm et égale ou inférieure à 5 cm.

10. Ensemble de levier de changement de vitesse selon la revendication 9, dans lequel la distance H est égale ou supérieure à 1,2 cm et égale ou inférieure à 4 cm.

11. Ensemble de levier de changement de vitesse selon la revendication 10, dans lequel la distance H est égale ou supérieure à 1,4 cm et égale ou inférieure à 3 cm.

12. Ensemble d'une boîte de vitesses et d'un ensemble de levier de changement de vitesse, l'ensemble comprenant une boîte de vitesses et un ensemble de levier de changement de vitesse selon l'une quelconque des revendications précédentes.

13. Ensemble d'un corps de véhicule et d'un ensemble de levier de changement de vitesse, l'ensemble comprenant un corps de véhicule et un ensemble de levier de changement de vitesse selon l'une quelconque des revendications 1 à 11.
